Europäisches Patentamt

European Patent Office

Office européen des brevets

(11) Veröffentlichungsnummer: **0 421 291 B1**

(12) **EUROPÄISCHE PATENTSCHRIFT**

(45) Veröffentlichungstag der Patentschrift: **04.01.95**

(21) Anmeldenummer: **90118647.8**

(22) Anmeldetag: **28.09.90**

(51) Int. Cl.⁶: **G01J 3/42**, G01N 21/31, G01N 21/61

(54) **Anordnung zur spektroskopischen Messung der Konzentration mehrerer Komponenten eines Gasgemisches.**

(30) Priorität: **04.10.89 DE 3933043**

(43) Veröffentlichungstag der Anmeldung:
**10.04.91 Patentblatt 91/15**

(45) Bekanntmachung des Hinweises auf die
Patenterteilung:
**04.01.95 Patentblatt 95/01**

(84) Benannte Vertragsstaaten:
**AT BE CH DE ES FR GB IT LI NL SE**

(56) Entgegenhaltungen:
**DE-A- 2 924 843**
**DE-A- 2 939 733**
**DE-C- 2 326 123**
**US-A- 4 849 637**

**PATENT ABSTRACTS OF JAPAN, unexamined applications, P field, Band 9, Nr. 127, 31. Mai 1985, The Patent Office Japanese Government, Seite 133 P 360**

(73) Patentinhaber: **KERNFORSCHUNGSZENTRUM KARLSRUHE GMBH**
**Postfach 36 40**
**D-76021 Karlsruhe (DE)**

(72) Erfinder: **Rinke, Günter, Dr.**
**Traminerweg 3**
**D-7504 Weingarten (DE)**

(74) Vertreter: **Rückert, Friedrich, Dr.**
**Kernforschungszentrum Karlsruhe GmbH,**
**Patente und Lizenzen**
**Weberstrasse 5**
**D-76133 Karlsruhe (DE)**

**Beschreibung**

Die Erfindung betrifft eine Anordnung und ein Verfahren zur spektroskopischen Messung der Konzentration mehrerer Komponenten eines Gasgemisches entsprechend dem ersten und dem zweiten Patentanspruch.

Es sind Anordnungen kommerziell erhältlich, die aus einer Lichtquelle mit kontinuierlichem Spektrum, einer Meßzelle, die mit einem Gasgemisch gefüllt wird, einem Spektrometer und einem Detektor bestehen. Einige dieser Anordnungen verwenden UV-Lampen mit kontinuierlichem Emissionsspektrum wie z.B. Deuterium- und Xenonlampen.

Probleme bereiten die bekannten Anordnungen, wenn die Konzentration einzelner Komponenten in einem $SO_2$ enthaltenden Gasgemisch gemessen werden soll, in welchem $SO_2$ in hoher Konzentration und die übrigen Gase nur in vergleichsweise geringer Konzentration vorliegen.

$SO_2$, das ein schmales Absorptionslinienspektrum aufweist, stört in diesem Fall deren Messung.

Wegen des begrenzten spektralen Auflösungsvermögens überlappen die durch das Spektrometer verbreiterten Absorptionslinien von $SO_2$ teilweise mit Absorptionslinien der übrigen Gase. Dies führt zu Querempfindlichkeiten und schlechten Nachweisgrenzen. Speziell bei Rauchgasen, die viel $SO_2$ enthalten, begrenzt der quasi-kontinuierliche Untergrund im UV die Meßstrecke.

Der Erfindung liegt die Aufgabe zugrunde, eine verbesserte Anordnung und ein Verfahren zur spektroskopischen Messung der Konzentration mehrer Komponenten eines $SO_2$ enthaltenden Gasgemisches vorzuschlagen, bei dem der Einfluß der in hoher Konzentration vorliegenden Störkomponente $SO_2$ eliminiert wird.

Die Aufgabe wird erfindungsgemäß durch die im ersten Patentanspruch beschriebene Anordnung und das im zweiten Patentanspruch beschriebene Verfahren gelöst.

Der abhängige Anspruch gibt eine bevorzugte Ausgestaltung des erfindungsgemäßen Verfahrens an.

Aus der Zeitschrift für technische Physik, 1943, Nr. 5, Seiten 97-103: K. F. Luft "Über eine neue Methode der registrierenden Gasanalyse mit Hilfe der Absorption ultraroter Strahlen ohne spektrale Zerlegung" ist es zwar bekannt, "daß man noch eine bedeutende Verbesserung der Selektivität durch Einschaltung von sog. Filterkammern in den Strahlengang erzielen kann. Diese Filterkammern werden mit den Gasen gefüllt, deren Absorptionsbanden sich mit denjenigen des zu bestimmenden Gases überlappen" (Seite 102). Die Filterkammern werden jedoch in einer Meßanordnung eingesetzt, die auf einem völlig anderem Nachweisverfahren basiert. Diese Meßanordnung besteht aus zwei Strahlern, die auf Rotglut erhitzt werden. Der eine Strahler schickt Wärmestrahlung durch eine Analysenkammer, die das zu untersuchende Gasgemisch enthält, in eine dahinterliegende Meßkammer. Parallel dazu schickt der zweite Strahler Wärmestrahlung durch eine in der Regel mit Luft gefüllte Vergleichskammer in eine zweite Meßkammer. Beide Strahlengänge werden periodisch durch ein Blendenrad unterbrochen. Die Meßkammern enthalten das im Gemisch nachzuweisende Gas. Ein Maß für den Gehalt des zu messenden Gases in der Analysenkammer ist das Ausmaß der periodischen Erwärmung des Gasinhalts in den Meßkammern. Diese periodische Erwärmung des Gases der Meßkammern verursacht Differenzdruckschwankungen, die in Kapazitätsänderungen umgesetzt und auf diese Weise registriert werden.

Mit dieser Meßanordnung läßt sich die Konzentration der störenden Gase nicht ermitteln. Außerdem kann nur die Konzentration eines einzigen Gases bestimmt werden, während erfindungsgemäß die Bestimmung mehrerer Gase gleichzeitig möglich ist.

Die selbe Meßanordnung ist außerdem in den VDE-Berichten Nr. 97, 1966, Seiten 15-19 in einem Beitrag von Dr. W. Schäfer "Ultrarot-Analysatoren und andere Betriebsphotometer" beschrieben.

Erfindungsgemäß wird in den Meßstrahlengang ständig eine Zelle gebracht, die das störende Gas $SO_2$ enthält. Wird dessen Druck und die Zellenlänge genügend gewählt, dann werden entsprechende Anteile aus dem Lichtquellenspektrum ausgefiltert, so daß die eigentliche Absorption durch $SO_2$ in der Meßgaszelle nicht mehr erfaßt wird. Die Konzentration von $SO_2$ kann bei einer anderen Wellenlänge bestimmt werden, bei der kleinere Absorptionskoeffizienten vorliegen.

Im Gegensatz zu Gasfilterkorrelationsverfahren, wie sie in nichtdispersiven Mehrkomponenten-Prozeßphotometern im Infraroten eingesetzt werden, befindet sich die mit dem störenden Gas gefüllte Hilfsgaszelle ständig im Meßstrahlengang.

Die Vorteile der Erfindung bestehen in der geringeren Querempfindlichkeit, dem kleineren Untergrund, der für andere (Spuren-) Gase eine größere Meßstrecke ermöglicht, und einer mechanisch starren Meßanordnung, die für die Prozeßmeßtechnik gut geeignet ist.

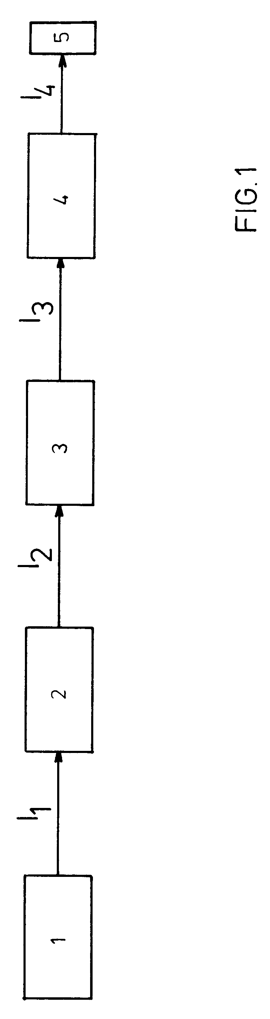

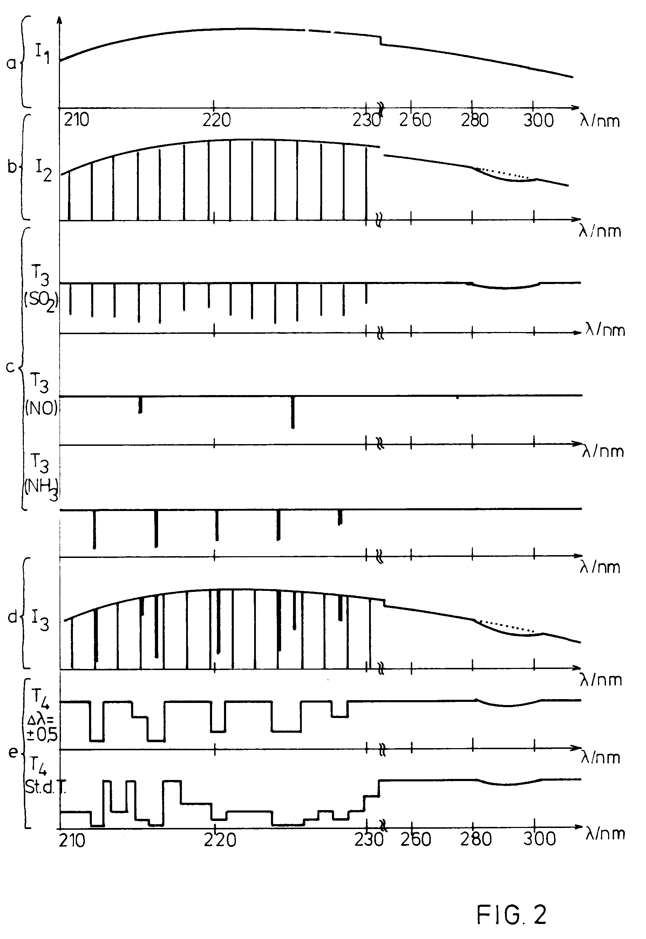

Die Erfindung wird im folgenden anhand eines Ausführungsbeispiels und anhand der Figuren 1 und 2 näher erläutert.

Figur 1 zeigt eine erfindungsgemäße Meßanordnung, die aus einer UV-Lampe 1, einer abgeschlossenen Hilfsgaszelle 2, einer Durchfluß-Meßgaszelle 3, einem Spektrometer 4, und einem Detektor 5, besteht. Bei diesem Detektor handelt es sich insbesondere um ein lineares oder 2-dimensionales Array.

Die Hilfsgaszelle 2 ist mit $SO_2$ gefüllt. Die Meßgaszelle 3 enthält $SO_2$, NO und $NH_3$.

Das die UV-Lampe 1 verlassende Licht der Intensität $I_1$ mit kontinuierlichem Spektrum wird in der Hilfsgaszelle 2 und Meßgaszelle 3 jeweils partiell in charakteristischer Weise geschwächt, so daß nach diesen Vorrichtungen Licht der Intensität $I_2$ bzw. $I_3$ vorliegt. $I_4$ bezeichnet die durch das begrenzte Auflösungsvermögen des Array-Spektrometers veränderten Lichtintensitäten.

In Figur 2 sind Lichtintensitäten und die Transmissionen gegen die Wellenlänge in nm ausgetragen.

Abschnitt a zeigt das kontinuierliche Emissionsspektrum des die UV-Lampe verlassenden Lichtstrahls.

Abschnitt b zeigt das durch die Hilfszelle 2 modifizierte Spektrum $I_2$. Es weist an den für $SO_2$ charakteristischen Wellenlängen so starke diskrekte Absorptionslinien auf, daß dort kein Licht transmittiert wird.

Abschnitt c zeigt die relativen Lichtintensitäten $T_3$ für $SO_2$, NO und $NH_3$ in Abhängigkeit von der Wellenlänge, die durch die Gasmischung in der Meßzelle 3 bestimmt werden, wobei $T_3 = I_3/I_2$ gilt.

Abschnitt d zeigt das durch die Zellen 2 und 3 modifizierte Spektrum des die Meßgaszelle 3 verlassenden Lichts $I_3$ mit den charakteristischen Absorptionslinien von $SO_2$, NO und $NH_3$. Es ergibt sich durch Multiplikation des Spektrums in a mit den Kurven b und c.

Abschnitt e zeigt die relativen Lichtintensitäten $T_4$ am Ausgang des Spektrometers in Abhängigkeit von der Wellenlänge, wobei $T_4 = I_4/I_1$ gilt. Dem Diagramm liegt ein spektrales Auflösungsvermögen von $\Delta\lambda \pm 0{,}5$ nm zugrunde.

Zum Vergleich enthält Abschnitt e die relative Intensität $T_4$ (St. d. T.) in Abhängigkeit von der Wellenlänge $\lambda$, die unter sonst gleichen Meßbedingungen erhalten wird, wenn man auf die erfindungsgemäße Hilfsgaszelle 2 verzichtet.

Im Ausführungsbeispiel kann der Wellenlängenbereich zwischen 280 und 300 nm zur Ermittlung der Konzentration von $SO_2$ herangezogen werden.

**Patentansprüche**

1. Anordnung zur spektroskopischen Messung der Konzentration mehrerer Komponenten eines Gasgemisches,
   a) mit einer Lichtquelle (1), die Licht mit einem kontinuierlichen Spektrum aussendet,
   b) mit einer vom Licht durchstrahlten Meßzelle (2), die mit einem solchen $SO_2$ enthaltenden Gasgemisch gefüllt ist, bei dem die Konzentration der Komponente $SO_2$ die zu

messenden Konzentrationen anderer Komponenten soweit übersteigt, daß die Messung der Konzentrationen der anderen Komponenten beeinflußt wird,
   c) mit einem Spektrometer (4) und
   d) einem linearen oder zweidimensionalen Array-Detektor (5) zur Bestimmung der Konzentrationen der Komponenten aus der Intensität von Absorptionslinien in dem die Meßzelle verlassenden Licht, der einen Wellenlängenbereich zwischen 210 und 300 nm registriert, wobei sich
   e) im Strahlengang zwischen Lichtquelle (1) und Detektor (5) eine Hilfsgaszelle (2) befindet, die mit $SO_2$ gefüllt ist.

2. Verfahren zur spektroskopischen Messung der Konzentration mehrerer Komponenten eines Gasgemisches, bei dem
   a) eine Meßzelle mit einem solchen $SO_2$ enthaltenden Gasgemisch gefüllt wird, bei dem die Konzentration der Komponente $SO_2$ die zu messenden Konzentrationen der anderen Komponenten soweit übersteigt, daß die Messung der Konzentrationen der anderen Komponenten beeinflußt wird,
   b) die gefüllte Meßzelle mit dem Licht einer Lichtquelle mit kontinuierlichem Spektrum durchstrahlt wird,
   c) das Licht, nachdem es die Meßzelle durchstrahlt hat, auf ein Spektrometer geleitet wird,
   d) das das Spektrometer verlassende Licht auf einen linearen oder zweidimensionalen Array-Detektor geworfen wird, der einen Wellenlängenbereich von 210 bis 300 nm registriert,
   e) aus der Intensität von Absorptionslinien in dem die Meßzelle verlassenden Licht die Konzentrationen der Komponenten bestimmt werden,
   wobei
   f) eine Hilfsgaszelle mit $SO_2$ gefüllt und
   g) die Hilfsgaszelle während der Messung ständig im Strahlengang zwischen Lichtquelle und Detektor angeordnet wird.

3. Verfahren nach Anspruch 2, wobei der Bereich von 280 bis 300 nm zur Ermittlung der Konzentration von $SO2$ herangezogen wird.

**Claims**

1. Arrangement for spectroscopically measuring the concentration of a plurality of components of a gas mixture,
   a) having a light source (1), which emits light with a continuous spectrum,

b) having a measuring cell (2), which has the light shining therethrough and is filled with such a gas mixture containing $SO_2$, the concentration of the component $SO_2$ exceeding the concentrations to be measured of the other components to such an extent that the measurement of the concentrations of the other components is affected,

c) having a spectrometer (4) and

d) a linear or two-dimensional array detector (5) for determining the concentrations of the components from the intensity of absorption lines in the light leaving the measuring cell, said detector recording a wave-length range of between 210 and 300 nm,

e) an auxiliary gas cell (2) being situated in the path of light beam between light source (1) and detector (5) and being filled with $SO_2$.

2. Method of spectroscopically measuring the concentration of a plurality of components of a gas mixture, wherein

a) a measuring cell is filled with such a gas mixture containing $SO_2$, the concentration of the component $SO_2$ exceeding the concentrations to be measured of the other components to such an extent that the measurement of the concentrations of the other components is affected,

b) the filled measuring cell has the light of a light source with a continuous spectrum shining therethrough,

c) the light, after it has shone through the measuring cell, is conducted onto a spectrometer,

d) the light leaving the spectrometer is projected onto a linear or two-dimensional array detector, which records a wave-length range of from 210 to 300 nm,

e) the concentrations of the components are determined from the intensity of absorption lines in the light leaving the measuring cell,

f) an auxiliary gas cell being filled with $SO_2$, and

g) the auxiliary gas cell being constantly disposed in the path of light beam between light source and detector during the measuring process.

3. Method according to claim 2, wherein the range of from 280 to 300 nm is used to determine the concentration of $SO_2$.

## Revendications

1. Dispositif de mesurage spectroscopique de la concentration de plusieurs composants d'un mélange gazeux, comprenant :

a) une source de lumière (1) qui émet de la lumière avec un spectre continu,

b) une cellule de mesure (3) traversée par la lumière, qui est remplie d'un mélange gazeux contenant du $SO_2$, dans lequel la concentration du composant $O_2$ dépasse les concentrations à mesurer d'autres composants à un point tel qu'elle influence le mesurage des concentrations des autres composants,

c) un spectromètre (4),

d) un système détecteur de réseau (5) linéaire ou bidimensionnel pour la détermination des concentrations des composants à partir de l'intensité de lignes d'absorption dans la lumière quittant la cellule de mesure, détecteur qui enregistre un domaine de longueurs d'onde entre 210 et 300 mm et,

e) une cellule de gaz auxiliaire (2) remplie de $SO_2$ et qui se trouve dans le parcours des rayons entre la source de lumière (1) et le détecteur (5).

2. Procédé pour le mesurage spectroscopique de la concentration de plusieurs composants d'un mélange gazeux, dans lequel :

a) une cellule de mesure est remplie d'un mélange gazeux contenant du $SO_2$, où la concentration du composant $SO_2$ dépasse les concentrations à mesurer des autres composants, à un tel point que le mesurage des concentrations des autres composants en est influencé,

b) la cellule de mesure remplie est traversée par la lumière d'une source de lumière avec un spectre continu,

c) la lumière, après avoir traversé la cellule de mesure, est amenée à un spectromètre,

d) la lumière quittant le spectromètre est projetée sur un système détecteur de réseau linéaire ou bidimensionnel, qui enregistre un domaine de longueur d'onde de 210 à 300 nm,

e) les concentrations des composants sont déterminées à partir de l'intensité des lignes d'absorption dans la lumière quittant la cellule de mesure, dans lequel

f) une cellule de gaz auxiliaire est remplie de $SO_2$ et,

g) la cellule de gaz auxiliaire pendant la mesure est placée stablement dans le parcours des rayons entre la source de lumière et le détecteur.

3. Procédé selon la revendication 2, dans lequel la zone de 280 à 300 nm est utilisée pour la détermination de la concentration de $SO_2$.

FIG.1

EP 0 421 291 B1

FIG. 2